# FASCICULE DE BREVET EUROPEEN

(11) **EP 0 721 245 B1**
(45) Date de publication et mention de la délivrance du brevet: **28.10.1998**
(21) Numéro de dépôt: 96400019.4
(22) Date de dépôt: 04.01.1996
(51) Int. Cl.: H02G 3/12

(54) **Support d'appareillage à boîte semi-encastrée à travers un conduit, et son procédé de mise en oeuvre**
Geräteträger für ein teilweise in einer Leitung versenktes Gehäuse, und Verfahren zu seiner Durchführung
Apparatus support for a box partly embedded in a conduit, and method for carrying out the same

(30) Priorité: 05.01.1995 FR 9500056
(43) Date de publication de la demande: 10.07.1996
(73) Titulaire: PLANET WATTOHM, 60303 Senlis (FR)
(72) Inventeur: Thirouin, Stéphane, F-60300 Senlis (FR); Collet, Philippe, F-92159 Suresnes (FR)
(74) Mandataire: CABINET BONNET-THIRION

(56) Documents cités:
- EP-A- 0 440 556
- FR-A- 2 637 131

## Description

La présente invention concerne d'une manière générale la fixation d'un quelconque appareillage, et, par exemple, d'un quelconque appareillage électrique, tel qu'un socle de prise de courant ou autre, à une quelconque embase de support, et, par exemple, à un mur.

Dans certaines installations, cette fixation met en oeuvre, d'une part, un conduit, communément appelé conduit électrique, à appliquer par son fond à l'embase de support, pour le logement et la protection des conducteurs électriques nécessaires à la desserte de l'appareillage concerné, et, d'autre part, un boîtier, ou cadre de support qui, fixé directement sur l'embase de support correspondante, est accolé au conduit, voire même chevauche localement ce conduit, transversalement par rapport à celui-ci.

Une telle disposition a pour avantage de permettre une mise en place rapide et de faciliter des interventions ultérieures.

Mais elle a pour inconvénient de conduire à une emprise assez importante sur l'embase de support.

Un example de l'état de la technique d'un conduit pour le logement de boîtiers est présenté dans la demande EP-A-2 637 131.

Dans d'autres installations, le conduit forme une goulotte de hauteur suffisante pour recevoir non seulement les conducteurs électriques mais, également, l'appareillage à fixer, soit que cet appareillage soit directement rapporté sur une telle goulotte, soit qu'il lui soit rapporté par l'intermédiaire d'une boîte, qui, disposée à l'intérieur de cette goulotte, est dûment assujettie à celle-ci.

Cette disposition, qui a pour avantage de réduire l'emprise sur l'embase de support, a pour inconvénient de conduire à une saillie relativement importante sur celle-ci de l'ensemble de la goulotte.

Dans d'autres installations, enfin, la fixation de l'appareillage se fait par l'intermédiaire d'une boîte encastrée dans l'embase de support, soit que, à la manière d'un insert, cette boîte ait été dûment surmoulée par avance dans cette embase de support, soit que, à la demande, cette embase de support soit dûment affouillée en conséquence.

Cette disposition, qui minimise tant l'emprise sur l'embase de support que la saillie sur celle-ci, implique nécessairement que le conduit électrique mis en oeuvre, alors un simple tube, soit lui-même dûment implanté par avance dans l'embase de support. Cette disposition ne facilite pas les interventions ultérieures.

Elle ne saurait donc convenir à toutes les installations, notamment à celles à établir dans des locaux déjà existants.

Suivant un premier aspect, la présente invention a d'une manière générale pour objet une disposition qui, convenant au contraire à un tel cas, ne présente pas les inconvénients succinctement évoqués précédemment.

De manière plus précise, elle a tout d'abord pour objet un support d'appareillage du genre comportant, en combinaison, d'une part, un conduit, destiné à être appliqué par son fond à une quelconque embase de support, et, d'autre part, une boîte, qui, propre à être assujettie à ce conduit, est destinée à recevoir l'appareillage à fixer, ce support d'appareillage étant d'une manière générale caractérisé en ce que, de hauteur hors tout supérieure à celle du conduit, la boîte est destinée à traverser le fond de celui-ci à la faveur d'un ajour ménagé localement à cet effet dans ce fond et à être au moins en partie engagée dans un évidement de l'embase de support sous-jacente ; elle a encore pour objet un procédé qui, pour la mise en oeuvre de ce support d'appareillage, implique la découpe d'un ajour au contour de la boîte dans le fond du conduit, l'affouillement d'un évidement dans l'embase de support sous-jacente au droit de cet ajour, et l'engagement de la boîte dans cet évidement à travers cet ajour.

Ainsi, suivant l'invention, la boîte s'étend pour partie dans le conduit et pour partie dans l'embase de support sous-jacente.

Autrement dit, elle est semi-encastrée dans cette dernière.

Ainsi, l'emprise de la boîte sur l'embase de support se fait avantageusement dans le cadre de l'emprise du conduit sur cette embase de support, sans venir en augmentation de cette dernière.

Conjointement, et à la différence d'une goulotte, le conduit peut avantageusement n'avoir qu'une hauteur réduite, comme il est de règle pour un conduit ne servant qu'au logement et à la protection de conducteurs électriques.

La saillie de l'ensemble sur l'embase de support se trouve ainsi avantageusement limitée.

Préférentiellement, et suivant un deuxième aspect de l'invention, le conduit présente, longitudinalement, en saillie sur son fond, pour l'assujettissement de la boîte, une cloison tubulaire, et la boîte est équipée d'au moins un doigt, et en pratique de deux, dont la section transversale est au moins en partie complémentaire de celle de cette cloison tubulaire, et qui sont destinés à être engagés dans celle-ci.

Le maintien de la boîte est ainsi assuré de manière avantageusement simple et sûre, sans vissage ni encliquetage.

Les caractéristiques et avantages de l'invention ressortiront d'ailleurs de la description qui va suivre, à titre d'exemple, en référence aux dessins schématiques annexés sur lesquels :
la figure 1 est, avec des arrachements locaux, une vue en perspective d'un support d'appareillage suivant l'invention, avec, de manière éclatée, l'appareillage à fixer ;
la figure 2 est, à échelle différente, une vue partielle en coupe transversale de ce support d'appareillage, suivant la ligne II-II de la figure 1 ;
la figure 3 est une vue en perspective de la boîte que comporte ce support d'appareillage, vue d'un premier côté ;
la figure 4 est une vue en perspective de cette boîte, vue du côté diamétralement opposé au précédent ;
les figures 5A, 5B sont des vues en perspective qui, dérivées de celle de la figure 4, illustrent deux phases successives de la mise en oeuvre du support d'appareillage suivant l'invention ;
les figures 6, 7, 8, 9 et 10 sont des vues en perspective qui, avec des arrachements locaux pour certaines, se rapportent chacune respectivement à diverses variantes de réalisation.

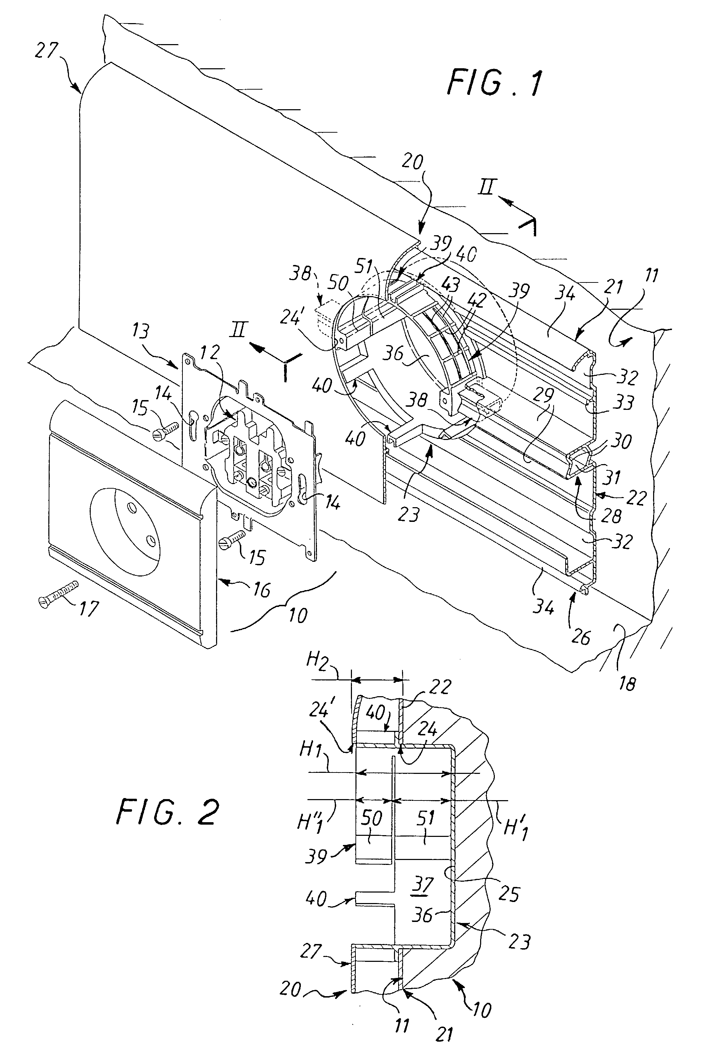

Tel qu'illustré sur ces figures, et, plus particulièrement, sur les figures 1 et 2, il s'agit, globalement, de rapporter un quelconque appareillage 10 sur une quelconque embase de support 11.

Dans l'application représentée, l'appareillage 10 est un appareillage électrique.

Il s'agit, plus précisément, à titre d'exemple, d'un socle de prise de courant.

Un tel appareillage 10 étant bien connu par lui-même, et ne faisant pas en propre l'objet de la présente invention, il ne sera pas décrit dans tous ses détails ici.

Il suffira d'indiquer qu'il comporte un mécanisme 12, que ce mécanisme 12 est solidaire d'une plaque de fixation 13, communément appelée support, que, en positions diamétralement opposées l'un par rapport à l'autre, cette plaque de fixation 13 comporte deux perçages 14 propres au passage de vis 15 nécessaires à la fixation recherchée, et que l'ensemble peut être recouvert par un enjoliveur 16 qu'une vis 17 permet d'assujettir au mécanisme 12.

Dans l'application représentée, l'embase de support 11 est, corollairement, un mur, et, plus précisément, la partie basse de ce mur, c'est-à-dire celle avoisinant immédiatement le plancher 18 correspondant.

Tel que schématisé, le mur formant l'embase de support 11 peut être massif.

Mais il peut également s'agir d'une plaque rapportée sur un tel mur massif, comme cela est le cas lors de la rénovation de certains locaux.

Pour la fixation de l'appareillage 10 à l'embase de support 11, il est mis en oeuvre, de manière connue en soi, un support d'appareillage 20.

De manière également connue en soi, ce support d'appareillage 20 comporte, en combinaison, d'une part, un conduit 21, destiné à être appliqué par son fond 22 à l'embase de support 11, et, d'autre part, une boîte 23, qui, propre à être assujettie au conduit 21, suivant des modalités décrites plus en détail ultérieurement, est destinée à recevoir l'appareillage 10 à fixer.

Suivant l'invention, de hauteur hors tout H1 supérieure à celle H2 du conduit 21, la boîte 23 est destinée à traverser le fond 22 de ce conduit 21, à la faveur d'un ajour 24 ménagé localement à cet effet dans ce fond 22, et à être au moins en partie engagée dans un évidement 25 de l'embase de support 11 sous-jacente.

De manière usuelle, le conduit 21 comporte un corps 26, qui présente son fond 22, et un couvercle 27, qui est apte à être rapporté, par exemple par encliquetage, sur le corps 26.

En pratique, ce corps 26 et ce couvercle 27 sont des profilés extrudés, réalisés par exemple en matière synthétique.

Le conduit 21 ne relevant cependant pas dans tous ses détails de la présente invention, seuls en seront décrits dans ce qui suit les éléments nécessaires à la compréhension de celui-ci.

Il suffira d'indiquer à ce sujet que, pour l'assujettissement de la boîte 23, et suivant des dispositions décrites plus en détail ultérieurement, le conduit 21 présente, longitudinalement, en saillie sur son fond 22, c'est-à-dire sur le fond de son corps 26, une cloison tubulaire 28.

Cette cloison tubulaire 28 se trouve définie, d'une part, par deux parois 29, qui, sensiblement parallèles l'une à l'autre, s'étendent sensiblement perpendiculairement au fond 22, en étant chacune formées d'une remontée de celui-ci, et, d'autre part, par deux parois 30, qui, elles aussi sensiblement parallèles l'une à l'autre, s'étendent, elles, sensiblement parallèlement au fond 22, en entretoisant à distance l'une de l'autre les deux parois 29, l'une le long du bord libre de celles-ci, l'autre à distance de ce bord libre.

Dans la forme de réalisation représentée, les parois 30 ont l'une et l'autre un profil transversal en dièdre, dont l'arête est tournée vers le fond 22.

Il en résulte que la section transversale du volume intérieur 31 de la cloison tubulaire 28, tel que défini conjointement par les parois 29 et 30, a, globalement, une allure en chevron.

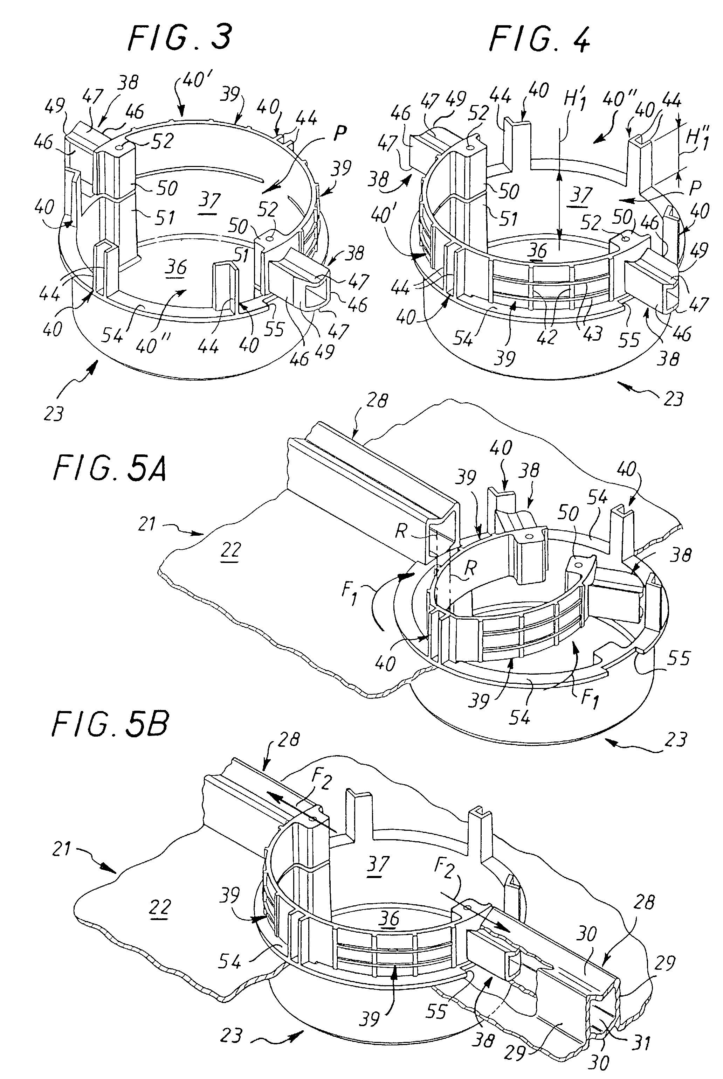

Abstraction de la cloison tubulaire 28, le fond 22 du conduit 21 n'est pas nécessairement plat, comme représenté par mesure de simplicité sur les figures 5A, 5B, 6 et 7.

Au contraire, et tel que représenté à titre d'exemple sur la figure 1, il peut présenter, au moins localement, dans son épaisseur, une ou plusieurs déformations en demi-onde 32, qui courent sur toute sa longueur, notamment pour sa rigidification ou pour la fixation d'accessoires d'angles avec des pattes venant se loger dans les alvéoles ainsi créés et/ou comporter en saillie une ou plusieurs nervures 33, qui courent également sur toute sa longueur, notamment pour permettre d'y assujettir localement un quelconque accessoire non représenté, tel qu'une cloison amovible.

Outre le fond 22, le corps 26 du conduit 21 présente, également, longitudinalement, une ou plusieurs ailes 34, qui courent elles aussi sur toute sa longueur.

La hauteur hors tout H2 du conduit 22 est celle de l'aile 34 la plus haute.

La cloison tubulaire 28 a donc elle-même une hauteur au plus égale à cette hauteur hors tout H2.

Dans les formes de réalisation plus particulièrement représentées sur les figures 1 à 9, la boîte 23 ne comporte qu'un seul poste P, pour la réception d'un seul appareillage 10, et elle a, en plan, un contour circulaire.

Elle comporte donc, globalement, un fond 36 et une paroi latérale 37.

Par exemple, cette paroi latérale 37 est globalement cylindrique.

Mais, en variante, elle peut aussi bien être plus ou moins tronconique.

Suivant l'invention, la boîte 23 est équipée d'au moins un doigt 38, dont la section transversale est au moins en partie complémentaire de celle du volume intérieur 31 de la cloison tubulaire 28 du conduit 21, et qui est destiné à être engagé dans celle-ci.

En pratique, la boîte 23 est équipée de deux doigts 38 disposés chacun respectivement en positions diamétralement opposées l'un par rapport à l'autre.

Dans les formes de réalisation représentées sur les figures 1 à 7, chacun de ces doigts 38 est porté par une patte élastiquement déformable 39, qui appartient à la boîte 23, et qui, en pratique, est d'un seul tenant avec celle-ci.

Dans la forme de réalisation plus particulièrement représentée sur les figures 1 à 5, la racine R de cette patte élastiquement déformable 39, c'est-à-dire la partie, formant axe de rotation, autour de laquelle elle est apte à se déformer élastiquement, tel que schématisé en traits interrompus sur la figure 5A, est sensiblement perpendiculaire au fond 36 de la boîte 23.

Plus précisément, dans cette forme de réalisation, la partie supérieure de la paroi latérale 37 de la boîte 23, c'est-à-dire la partie de cette paroi latérale 37 la plus éloignée de son fond 23, se trouve au moins localement fractionnée en plusieurs piliers 40, et chacune des pattes élastiquement déformables 39 portant un doigt 38 est issue d'un de ces piliers 40.

En pratique, deux doigts 38 étant prévus, et donc deux pattes élastiquement déformables 39, ces pattes élastiques 39 sont l'une et l'autre issues d'un même pilier 40, en s'étendant chacune respectivement de part et d'autre de celui-ci.

En pratique, également, chacune des pattes élastiquement déformables 39 s'étend suivant un quart de cercle à compter du pilier 40 dont elle est issue.

Il résulte de ce qui précède que la partie supérieure de la paroi latérale 37 de la boîte 23 n'est circulairement continue que sur une fraction de la circonférence, ou, autrement dit, que cette partie supérieure comporte circulairement deux portions distinctes, à savoir une portion circulairement continue 40', à la laquelle appartiennent les pattes élastiquement déformables 39 et le pilier 40 dont elles sont issues, et une portion 40" fractionnée en piliers 40.

Dans la forme de réalisation représentée, l'une et l'autre de ces deux portions 40', 40" de la partie supérieure de la paroi latérale 37 de la boîte 23 s'étendent chacune suivant une moitié de la circonférence.

Les piliers 40 s'étendent longitudinalement dans le prolongement des génératrices de la partie inférieure de la paroi latérale 37 de la boîte 23.

Ils ont une hauteur H"1, qui est la même pour tous, et qui est sensiblement égale à celle des pattes élastiquement déformables 39, celles-ci s'étendant à ras avec leur partie supérieure.

Cette hauteur H"1 peut être inférieure, comme représenté, à celle H'1 de la partie inférieure de la paroi latérale 37, ou être égale ou supérieure à cette hauteur H'1.

Quoi qu'il en soit, la hauteur hors tout H1 de la paroi latérale 37 se trouve définie par la somme des hauteurs H"1 et H'1 précédentes.

Corollairement, la partie inférieure de la paroi latérale 37 de la boîte 23, c'est-à-dire la partie de cette paroi latérale 37 la plus proche du fond 36, est, elle, circulairement continue.

Dans la forme de réalisation représentée, les pattes élastiquement déformables 39 se trouvent renforcées, sur leur surface extérieure, par un réseau, quadrillé, de nervures axiales 42 et transversales 43.

De même, les piliers 40 se trouvent renforcés, sur leur surface extérieure, par une ou deux nervures axiales 44.

Pour la portion circulairement continue 40' de la partie supérieure de la paroi latérale 37, seul intervient un pilier 40.

Pour l'autre portion fractionnée 40", sont prévus, dans la forme de réalisation représentée, à distance les uns des autres, plusieurs piliers 40, par exemple au nombre de trois.

Dans la forme de réalisation représentée, les doigts 38 portés par les pattes élastiquement déformables 39 sont d'un seul tenant avec celles-ci.

La boîte 23 est de ce fait dans ce cas avantageusement monobloc.

Pour son allégement, les doigts 38 sont creux.

Dans la forme de réalisation représentée, ces doigts 38 sont globalement parallélépipédiques.

Ils comportent deux parois 46, qui sont sensiblement parallèles l'une à l'autre, et qui s'étendent sensiblement perpendiculairement au fond 36 de la boîte 23, et deux parois 47, qui, elles aussi sensiblement parallèles l'une à l'autre, s'étendent, elles, sensiblement parallèlement au fond 36 de la boîte 23, et entretoisent les parois 46 précédentes le long de leur bord libre.

En pratique, seule l'une des parois 47 a un profil transversal en dièdre complémentaire de celui des parois 30 de la cloison tubulaire 28 du conduit 21.

Il s'agit de la paroi 47 qui correspond à celle de ces parois 30 qui, extérieurement, est concave.

La paroi 47 correspondante est donc, elle aussi, extérieurement concave.

Pour faciliter leur engagement dans la cloison tubulaire 28 du conduit 21, l'extrémité libre des doigts 38 est abattue par un chanfrein 49, du côté de ces doigts 38 opposé aux pattes élastiquement déformables 39.

En pratique, les doigts 38 sont disposés aux extrémités des pattes élastiquement déformables 39.

Ils s'étendent donc chacun respectivement en direction opposée l'un par rapport à l'autre, aux extrémités de la portion circulairement continue 40' de la partie supérieure de la paroi latérale 37 de la boîte 23, en saillie sur la surface extérieure des pattes élastiquement déformables 39.

Dans la forme de réalisation représentée, les pattes élastiquement déformables 39 présentent, en saillie sur leur surface intérieure, au droit des doigts 38, dos à dos par rapport à ceux-ci, des bossages 50, qui s'étendent axialement, c'est-à-dire parallèlement à l'axe de la boîte 23, en étant chacun respectivement prolongés par des bossages 51 en saillie sur la surface intérieure de la partie inférieure de la paroi latérale 37 de celle-ci, et qui, pour l'intervention des vis 15, présentent chacun à leur extrémité supérieure un perçage 52.

Dans la forme de réalisation représentée, la boîte 23 présente, transversalement, en saillie, à mi-hauteur, sur la surface extérieure de sa paroi latérale 37, une collerette 54, pour son appui sur le fond 22 du conduit 21.

En pratique, cette collerette 54 intervient au débouché de la partie inférieure, circulairement continue, de la paroi latérale 37, et les piliers 40 appartenant à la partie supérieure de celle-ci en sont directement issus, avec leurs nervures axiales 44.

Préférentiellement, et tel que représenté, cette collerette 54 présente, en outre, localement, en positions diamétralement opposées l'un par rapport à l'autre, au droit, chacun respectivement, des doigts 38, deux embrèvements 55, pour son engagement sur la cloison tubulaire 28 du conduit 21 et son immobilisation en rotation.

Pour la mise en oeuvre du support d'appareillage 20 suivant l'invention, il peut par exemple être procédé comme suit.

On assure tout d'abord, par exemple à l'aide d'une scie cloche la découpe d'un ajour 24 au contour de la boîte 23 dans le fond 22 du conduit 21, c'est-à-dire dans le fond du corps 26 de celui-ci.

Bien entendu, cet ajour 24 intéresse non seulement le fond 22, mais également, au passage, la cloison tubulaire 28, qui, ainsi, se trouve interrompue localement.

On assure, ensuite, par exemple à l'aide de la même scie cloche l'affouillement de l'évidement 25 dans l'embase de support 11, au droit de l'ajour 24 du conduit 21.

On assure enfin l'engagement de la boîte 23 dans cet évidement 25 à travers l'ajour 24 du conduit 21.

Après cet engagement, on assure l'engagement de chacun des doigts 38 de la boîte 23 dans les tronçons, précédemment dégagés, de la cloison tubulaire 28 du conduit 21.

Par exemple, il est pour ce faire procédé à un pincement des pattes élastiquement déformables 39, c'est-à-dire à un rapprochement de celles-ci, suivant les flèches F1 de la figure 5A, puis, conjointement avec un retour à leur configuration initiale de ces pattes élastiquement déformables 39, un engagement des doigts 38 dans les tronçons de la cloison tubulaire 28, suivant les flèches F2 de la figure 5B.

La boîte 23 étant ainsi dûment assujettie au conduit 21, le couvercle 27 est rapporté sur le corps 26 du conduit 21, après avoir lui aussi été évidé d'un ajour 24' de même contour que l'ajour 24 du fond 22.

Par les vis 15, le mécanisme 12 de l'appareillage 10 est rapporté sur la boîte 23, par sa plaque de fixation 13.

Par la vis 17, l'enjoliveur 16 est à son tour rapporté sur le mécanisme 12.

Le couvercle 27 du conduit 21 se trouve alors localement pris, entre, d'une part, la boîte 23, et, d'autre part, la plaque de fixation 13 et l'enjoliveur 16 de l'appareillage 10.

Ainsi qu'on le comprendra, l'arrivée de conducteurs électriques dans la boîte 23 se fait entre les piliers 40 de la portion fractionnée 40" de la partie supérieure de sa paroi latérale 37, cependant que la portion circulairement continue 40' diamétralement opposée à cette portion fractionnée 40" isole avantageusement le volume interne de la boîte 23 du reste du conduit 21, où peuvent dès lors circuler d'autres conducteurs électriques.

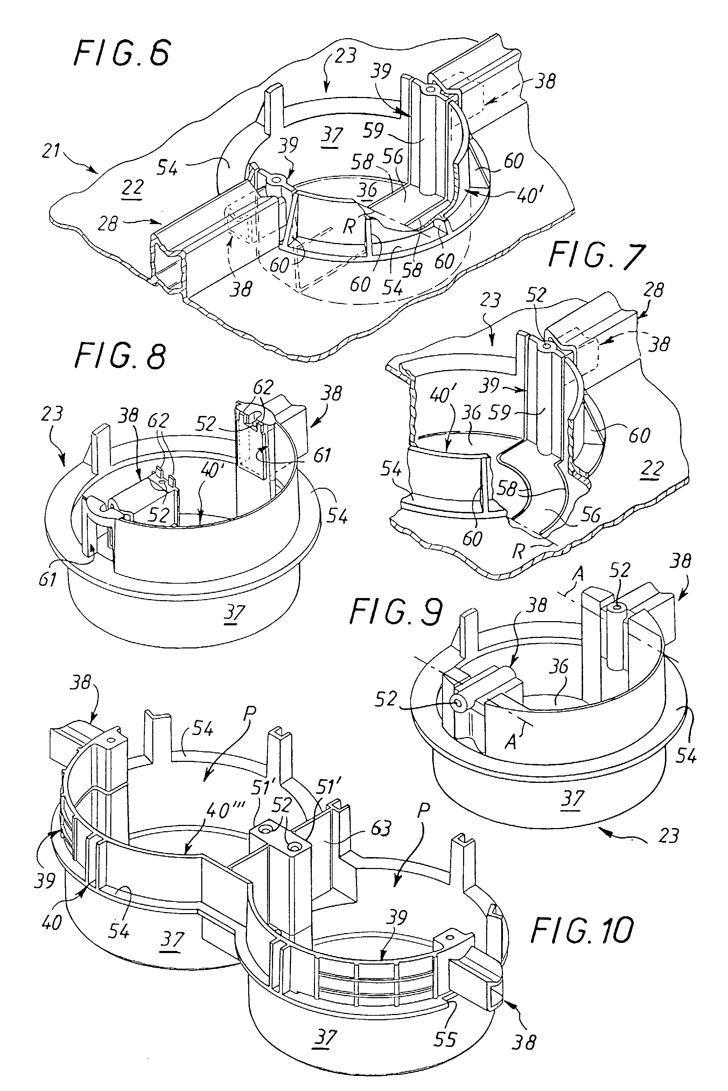

Suivant les variantes de réalisation représentées sur les figures 6 et 7, la racine R des pattes élastiquement déformables 39 portant les doigts 38 appartient au fond 36 de la boîte 23.

Ces pattes élastiquement déformables 39 comportent, chacune, successivement, à compter de leur racine R, un tronçon souple 56, qui appartient au fond 36 de la boîte 23, en étant individualisé dans celui-ci par deux fentes 58 globalement parallèles l'une à l'autre, et, d'équerre avec ce tronçon souple 56, et d'un seul tenant avec celui-ci, un tronçon rigide 59, qui appartient à la paroi latérale 37 de la boîte 23, en étant individualisé dans celle-ci par les fentes 58 précédentes, et qui porte le doigt 38 associé.

Dans la forme de réalisation représentée sur la figure 6, le tronçon souple 56 s'étend radialement.

En variante, dans la forme de réalisation représentée sur la figure 7, il s'étend, d'abord, radialement, puis circulairement, sur environ un quart de cercle, ce qui permet d'en augmenter la longueur.

Dans l'un et l'autre cas, le tronçon rigide 59 est rigidifié par une surépaisseur formant pilier dans sa zone médiane, et, comme précédemment, il comporte, à son extrémité supérieure un perçage 52.

Dans l'un et l'autre cas, également, la portion circulairement continue 40' de la partie supérieure de la paroi latérale 37 de la boîte 23 est en continuité avec la portion correspondante de la partie inférieure de cette paroi latérale 37, en s'étendant circulairement entre deux fentes 58, et en étant de place en place rigidifiée par des nervures de rigidification 60 venues de la collerette 54.

Suivant la variante de réalisation représentée sur la figure 8, les doigts 38 sont montés coulissants sur cette boîte 23, parallèlement au fond 36 de celle-ci.

Ils forment en pratique des pièces distinctes de la boîte 23, et pour leur guidage, la portion circulairement continue 40' de la partie supérieure de la paroi latérale 37 de la boîte 23, qui, comme précédemment, est d'un seul tenant avec le reste de celle-ci, présente, en positions diamétralement opposées l'un par rapport à l'autre, deux évidements 61.

L'engagement des doigts 38 dans ces évidements 61 se fait de l'intérieur de la boîte 23 vers l'extérieur de celle-ci.

Pour limiter cet engagement, les doigts 38 portent, en saillie, des ergots 62.

Dans la forme de réalisation représentée, ce sont par ailleurs eux qui comportent les perçages 52.

Suivant la variante de réalisation représentée sur la figure 9, les doigts 38 sont montés pivotants sur la boîte 23, autour, chacun, d'un axe A qui, tel que schématisé en traits interrompus sur cette figure 9, est sensiblement parallèle au fond 36 de cette boîte 23.

Pour le reste, et il en est de même pour les formes de réalisation représentées sur les figures 6, 7 et 8, les dispositions sont sensiblement les mêmes que celles précédemment décrites.

Suivant la variante de réalisation représentée sur la figure 10, qui est dérivée de la forme de réalisation représentée sur les figures 1 à 5, la boîte 23 comporte, côte à côte, deux postes P, pour la mise en place de deux appareillages 10.

Globalement, les dispositions restent du type de celles décrites en référence aux figures 1 à 5.

Mais, à la jonction entre les deux postes P, la paroi latérale 37 comporte une portion continue 40''', qui est rigide, et qui va de l'un à l'autre de deux piliers 40 de chacun desquels est issue une patte élastiquement déformable 39 portant un doigt 38.

En outre, à cette jonction, les deux postes P sont séparés l'un de l'autre par une cloison 63 sur chacune des faces de laquelle est adossé un pilier 51' présentant à son extrémité supérieure un perçage 52.

Bien entendu, pour une telle réalisation à deux postes P, les dispositions pourraient être du type de celles décrites en référence aux figures 6 à 9 plutôt que d'être du type de celles décrites en référence aux figures 1 à 5.

La présente invention ne se limite d'ailleurs pas aux formes de réalisation décrites et représentées, mais englobe toute variante d'exécution et/ou de combinaison de leurs divers éléments dans le cadre des revendications.

## Revendications

1. Support d'appareillage, du genre comportant, en combinaison, d'une part, un conduit (21) destiné à être appliqué par son fond (22) à une quelconque embase de support (11), et, d'autre part, une boîte (23), qui, propre à être assujettie audit conduit (21), est destinée à recevoir l'appareillage (10) à fixer, caractérisé en ce que, de hauteur hors tout (H1) supérieure à celle (H2) du conduit (21), la boîte (23) est destinée à traverser le fond (22) de celui-ci à la faveur d'un ajour (24) ménagé localement à cet effet dans ce fond (22) et à être au moins en partie engagée dans un évidement (25) de l'embase de support (11) sous-jacente.

2. Support d'appareillage suivant la revendication 1, caractérisé en ce que, pour l'assujettissement de la boîte (23), le conduit (21) présente, longitudinalement, en saillie sur son fond (22), une cloison tubulaire (28), et la boîte (23) est équipée d'au moins un doigt (38), dont la section transversale est au moins en partie complémentaire de celle du volume intérieur (31) de ladite cloison tubulaire (28), et qui est destiné à être engagé dans celle-ci.

3. Support d'appareillage suivant la revendication 2, caractérisé en ce que le doigt (38) de la boîte (23) est porté par une patte élastiquement déformable (39) appartenant à ladite boîte (23).

4. Support d'appareillage suivant la revendication 2, caractérisé en ce que la patte élastiquement déformable (39) est d'un seul tenant avec la boîte (23).

5. Support d'appareillage suivant la revendication 4, caractérisé en ce que la racine (R) de la patte élastiquement déformable (39) est sensiblement perpendiculaire au fond (36) de la boîte (23).

6. Support d'appareillage suivant la revendication 5, caractérisé en ce que, la partie supérieure de la paroi latérale (37) de la boîte (23) se trouvant au moins localement fractionnée en plusieurs piliers (40), la patte élastiquement déformable (39) est issue d'un desdits piliers (40).

7. Support d'appareillage suivant l'une quelconque des revendications 5, 6, caractérisé en ce que la patte élastiquement déformable (39) s'étend sur environ un quart de cercle.

8. Support d'appareillage suivant la revendication 4, caractérisé en ce que la racine (R) de la patte élastiquement déformable (39) appartient au fond (36) de la boîte (23).

9. Support d'appareillage suivant la revendication 8, caractérisé en ce que la patte élastiquement déformable (39) comporte successivement, à compter de sa racine (R), un tronçon souple (56), qui appartient au fond (36) de la boîte (23), et, d'équerre avec ce tronçon souple (56), un tronçon rigide (59), qui appartient à la paroi latérale (37) de la boîte (23), et qui porte le doigt (38) associé.

10. Support d'appareillage suivant l'une quelconque des revendications 3 à 9, caractérisé en ce que le doigt (38) porté par la patte élastiquement déformable (39) est d'un seul tenant avec celle-ci.

11. Support d'appareillage suivant la revendication 2, caractérisé en ce que le doigt (38) est monté coulissant sur la boîte (23), parallèlement au fond (36) de celle-ci.

12. Support d'appareillage suivant la revendication 2, caractérisé en ce que le doigt (38) est monté pivotant sur la boîte (23), autour d'un axe (A) sensiblement parallèle au fond (36) de celle-ci.

13. Support d'appareillage suivant l'une quelconque des revendications 2 à 12, caractérisé en ce que la boîte (23) est équipée de deux doigts (38) disposés en positions diamétralement opposées l'un par rapport à l'autre.

14. Support d'appareillage suivant l'une quelconque des revendications 1 à 13, caractérisé en ce que la boîte (23) présente, transversalement, en saillie à mi-hauteur sur la surface extérieure de sa paroi latérale (37), une collerette (54) pour son appui sur le fond (22) du conduit (21).

15. Support d'appareillage suivant les revendications 2 et 14, prises conjointement, caractérisé en ce que la collerette (54) de la boîte (23) présente, localement, en positions diamétralement opposées l'un par rapport à l'autre, deux embrèvements (55), pour son engagement sur la cloison tubulaire (28) du conduit (21).

16. Support d'appareillage suivant l'une quelconque des revendications 1 à 15, caractérisé en ce que la partie supérieure de la paroi latérale (37) de la boîte (23) n'est circulairement continue que sur une fraction de la circonférence.

17. Support d'appareillage suivant la revendication 16, caractérisé en ce que la partie supérieure de la paroi latérale (37) de la boîte (23) comporte circulairement deux portions distinctes, à savoir une portion circulairement continue (40') et une portion (40") fractionnée en piliers (40).

18. Support d'appareillage suivant les revendications 6 et 17, prises conjointement, caractérisé en ce que la ou les pattes élastiquement déformables (39) appartiennent à la portion circulairement continue (40') de la partie supérieure de la paroi latérale (37) de la boîte (23).

19. Support d'appareillage suivant l'une quelconque des revendications 17, 18, caractérisé en ce que les deux portions (40', 40") distinctes de la partie supérieure de la paroi latérale (37) de la boîte (23) s'étendent chacune suivant une moitié de la circonférence.

20. Support d'appareillage suivant les revendications 13 et 19, prises conjointement, caractérisé en ce que les deux doigts (38) dont est équipée la boîte (23) s'étendent chacun respectivement aux extrémités de la portion circulairement continue (40') de la partie supérieure de sa paroi latérale (37).

21. Procédé pour la mise en oeuvre d'un support d'appareillage suivant l'une quelconque des revendications 1 à 20, caractérisé en ce qu'il implique la découpe d'un ajour (24) au contour de la boîte (23) dans le fond (22) du conduit (21), l'affouillement d'un évidement (25) au droit dudit ajour (24) dans l'embase de support (11) sous-jacente, et l'engagement de la boîte (23) dans ledit évidement (25) à travers ledit ajour (24).

## Patentansprüche

1. Geräteträger, der in Kombination einerseits einen Kanal (21), der dazu bestimmt ist, mit seinem Boden (22) an eine beliebige Tragfläche (11) angelegt zu werden, und andererseits ein Gehäuse (23) aufweist, das an dem Kanal (21) befestigt werden kann und zur Aufnahme des zu befestigenden Geräts (10) bestimmt ist, dadurch gekennzeichnet, daß das Gehäuse (23), dessen Gesamthöhe (H1) größer als die (H2) des Kanals (21) ist, dazu bestimmt ist, dessen Boden (22) in einer örtlich zu diesem Zweck in diesem Boden (22) vorgesehenen Öffnung (24) zu durchqueren und mindestens teilweise in eine Aussparung (25) der darunterliegenden Tragfläche (11) eingeführt zu werden.

2. Geräteträger nach Anspruch 1, dadurch gekennzeichnet, daß der Kanal (21) für die Anbringung des Gehäuses (23) in Längsrichtung an seinem Boden (22) hervorstehend eine rohrförmige wand (28) aufweist und das Gehäuse (23) mit mindestens einem Finger (38) versehen ist, dessen Querschnitt mindestens teilweise zu dem des Innenvolumens (31) der rohrförmigen Wand (28) ergänzend ist und der dazu bestimmt ist, in dieses eingeführt zu werden.

3. Geräteträger nach Anspruch 2, dadurch gekennzeichnet, daß der Finger (38) des Gehäuses (23) von einem zu diesem Gehäuse (23) gehörenden, elastisch verformbaren Lappen (39) getragen ist.

4. Geräteträger nach Anspruch 2, dadurch gekennzeichnet, daß der elastisch verformbare Lappen (39) mit dem Gehäuse (23) einstückig ausgeführt ist.

5. Geräteträger nach Anspruch 4, dadurch gekennzeichnet, daß die Wurzel (R) des elastisch verformbaren Lappens (39) zum Boden (36) des Gehäuses (23) im wesentlichen senkrecht ist.

6. Geräteträger nach Anspruch 5, dadurch gekennzeichnet, daß, wenn der obere Teil der Seitenwand (37) des Gehäuses (23) mindestens örtlich in mehrere Säulen (40) zerlegt ist, der elastisch verformbare Lappen (39) von einer dieser Säulen (40) ausgeht.

7. Geräteträger nach einem der Ansprüche 5, 6, dadurch gekennzeichnet, daß der elastisch verformbare Lappen (39) sich ungefähr über einen Viertelkreis erstreckt.

8. Geräteträger nach Anspruch 4, dadurch gekennzeichnet, daß die Wurzel (R) des elastisch verformbaren Lappens (39) zum Boden (36) des Gehäuses (23) gehört.

9. Geräteträger nach Anspruch 8, dadurch gekennzeichnet, daß der elastisch verformbare Lappen (39) von seiner Wurzel (R) an nacheinander einen zum Boden (36) des Gehäuses (23) gehörenden biegsamen Abschnitt (56) und rechtwinklig zu diesem einen zur Seitenwand (37) des Gehäuses (23) gehörenden starren Abschnitt (59) aufweist, der den zugeordneten Finger (38) trägt.

10. Geräteträger nach einem der Ansprüche 3 bis 9, dadurch gekennzeichnet, daß der vom elastisch verformbaren Lappen (39) getragene Finger (38) mit diesem einstückig ausgeführt ist.

11. Geräteträger nach Anspruch 2, dadurch gekennzeichnet, daß der Finger (38) auf dem Gehäuse (23) parallel zu dessen Boden (36) verschiebbar montiert ist.

12. Geräteträger nach Anspruch 2, dadurch gekennzeichnet, daß der Finger (38) an dem Gehäuse (23) um eine zu dessen Boden (36) im wesentlichen parallele Achse (A) schwenkbar montiert ist.

13. Geräteträger nach einem der Ansprüche 2 bis 12, dadurch gekennzeichnet, daß das Gehäuse (23) mit zwei Fingern (38) versehen ist, die in einander diametral entgegengesetzten Stellungen angeordnet sind.

14. Geräteträger nach einem der Ansprüche 1 bis 13, dadurch gekennzeichnet, daß das Gehäuse (23) in Querrichtung auf halber Höhe an der Außenfläche seiner Seitenwand (37) hervorstehend einen Flansch (24) für seine Auflage auf dem Boden (22) des Kanals (21) aufweist.

15. Geräteträger nach den Ansprüchen 2 und 14 zusammen, dadurch gekennzeichnet, daß der Flansch (54) des Gehäuses (23) örtlich in einander diametral entgegengesetzten Stellungen zwei Ausnehmungen (55) für sein Aufstecken auf die rohrförmige Wand (28) des Kanals (21) aufweist.

16. Geräteträger nach einem der Ansprüche 1 bis 15, dadurch gekennzeichnet, daß der obere Teil der Seitenwand (37) des Gehäuses (23) nur auf einem Teil des Umfangs umfänglich durchgehend ist.

17. Geräteträger nach Anspruch 16, dadurch gekennzeichnet, daß der obere Teil der Seitenwand (37) des Gehäuses (23) umfänglich zwei verschiedene Abschnitte aufweist, und zwar einen umfänglich durchgehenden Abschnitt (40') und einen in Säulen (40) zerlegten Abschnitt (40").

18. Geräteträger nach den Ansprüche 6 und 17 zusammen, dadurch gekennzeichnet, daß der oder die elastisch verformbaren Lappen (39) zu dem umfänglich durchgehenden Abschnitt (40') des oberen Teils der Seitenwand (37) des Gehäuses (23) gehören.

19. Geräteträger nach einem der Ansprüche 17, 18, dadurch gekennzeichnet, daß die beiden verschiedenen Abschnitte (40', 40") des oberen Teils der Seitenwand (37) des Gehäuses (23) sich jeweils über eine Hälfte des Umfangs erstrekken.

20. Geräteträger nach den Ansprüchen 13 und 19 zusammen, dadurch gekennzeichnet, daß die beiden Finger (38), mit denen das Gehäuse (23) versehen ist, sich jeweils an den Enden des umfänglich durchgehenden Abschnitts (40') des oberen Teils seiner Seitenwand (37) erstrecken.

21. Verfahren zur Verwendung eines Geräteträgers nach einem der Ansprüche 1 bis 20, dadurch gekennzeichnet, daß es das Ausschneiden einer Öffnung (24) mit dem Umriß des Gehäuses (23) im Boden (22) des Kanala (21), das Ausbrechen einer Aussparung (25) auf Höhe dieser Öffnung (24) in der darunterliegenden Tragfläche (11) und das Einführen des Gehäuses (23) in diese Aussparung (25) durch die Öffnung (24) hindurch mit sich bringt.

## Claims

1. A support for an item of equipment, of the kind comprising in combination on the one hand a conduit (21) intended to be fitted by means of its bottom (22) to any support base (11) and on the other hand a casing (23) which, being capable of being fastened to said conduit (21), is intended to receive the item of equipment (10) to be fixed, characterised in that, of an overall height (H1) greater than that (H2) of the conduit (21), the casing (23) is intended to pass through the bottom (22) thereof by way of an aperture (24) provided locally for that purpose in said bottom (22) and to be at least partially engaged into an opening (25) in the subjacent support base (11).

2. A support for an item of equipment according to claim 1 characterised in that, for fastening the casing (23), the conduit (21) has longitudinally in projecting relationship on its bottom (22) a tubular partition (28), and the casing (23) is provided with at least one finger (38) whose cross-section is at least in part complementary to that of the internal volume (31) of said tubular partition (28), and which is intended to be engaged into same.

3. A support for an item of equipment according to claim 2 characterised in that the finger (38) of the casing (23) is carried by an elastically deformable tongue (39) belonging to said casing (23).

4. A support for an item of equipment according to claim 2 characterised in that the elastically deformable tongue (39) is in one piece with the casing (23).

5. A support for an item of equipment according to claim 4 characterised in that the root (R) of the elastically deformable tongue (39) is substantially perpendicular to the bottom (36) of the casing (23).

6. A support for an item of equipment according to claim 5 characterised in that, the upper part of the side wall (37) of the casing (23) being at least locally divided into a plurality of columns (40), the elastically deformable tongue (39) extends from one of said columns (40).

7. A support for an item of equipment according to either one of claims 5 and 6 characterised in that the elastically deformable tongue (39) extends over approximately a quarter of a circle.

8. A support for an item of equipment according to claim 4 characterised in that the root (R) of the elastically deformable tongue (39) belongs to the bottom (36) of the casing (23).

9. A support for an item of equipment according to claim 8 characterised in that the elastically deformable tongue (39) comprises in succession, from its root (R), a flexible portion (56) which belongs to the bottom (36) of the casing (23) and, at a right angle to said flexible portion (56), a rigid portion (59) which belongs to the side wall (37) of the casing (23) and which carries the associated finger (38).

10. A support for an item of equipment according to any one of claims 3 to 9 characterised in that the finger (38) carried by the elastically deformable tongue (39) is in one piece therewith.

11. A support for an item of equipment according to claim 2 characterised in that the finger (38) is mounted slidably on the casing (23) parallel to the bottom (36) thereof.

12. A support for an item of equipment according to claim 2 characterised in that the finger (38) is mounted pivotably on the casing (23) about an axis (A) substantially parallel to the bottom (36) thereof.

13. A support for an item of equipment according to any one of claims 2 to 12 characterised in that the casing (23) is provided with two fingers (38) which are disposed in diametrally opposite positions with respect to each other.

14. A support for an item of equipment according to any one of claims 1 to 13 characterised in that the casing (23) is provided transversely in projecting relationship at a mid-height position on the outside surface of its side wall (37) with a collar portion (54) for it to bear against the bottom (22) of the conduit (21).

15. A support for an item of equipment according to claims 2 and 14 in combination characterised in that the collar portion (54) of the casing (23) is provided locally at diametrally oppositely disposed positions relative to each other with two connecting recesses (55) for engagement thereof on to the tubular partition (28) of the conduit (21).

16. A support for an item of equipment according to any one of claims 1 to 15 characterised in that the upper part of the side wall (37) of the casing (23) is circularly continuous only over a fraction of the circumference.

17. A support for an item of equipment according to claim 16 characterised in that the upper part of the side wall (37) of the casing (23) circularly comprises two separate portions, namely a circularly continuous portion (40') and a portion (40") which is divided into columns (40).

18. A support for an item of equipment according to claims 6 and 17 in combination characterised in that the elastically deformable tongue or tongues (39) belong to the circularly continuous portion (40') of the upper part of the side wall (37) of the casing (23).

19. A support for an item of equipment according to either one of claims 17 and 18 characterised in that the two separate portions (40', 40") of the upper part of the side wall (37) of the casing (23) each extend over a half of the circumference.

20. A support for an item of equipment according to claims 13 and 19 in combination characterised in that the two fingers (38) with which the casing (23) is provided each extend respectively at the ends of the circularly continuous portion (40') of the upper part of its side wall (37).

21. A process for using a support for an item of equipment according to any one of claims 1 to 20 characterised in that it involves cutting out an aperture (24) corresponding to the contour of the casing (23) in the bottom (22) of the conduit (21), producing an opening (25) in line with said aperture (24) in the subjacent support base (11) and engaging the casing (23) into said opening (25) through said aperture (24).
